Europäisches Patentamt

European Patent Office

Office européen des brevets

(19)

(11) Numéro de publication: **0 103 542**
**B1**

# (12) FASCICULE DE BREVET EUROPÉEN

(45) Date de publication du fascicule du brevet:
**10.06.87**

(51) Int. Cl.⁴: **G 04 C 3/14, H 02 P 8/00**

(21) Numéro de dépôt: **83810391.9**

(22) Date de dépôt: **30.08.83**

(54) **Ensemble moteur fonctionnant pas-à-pas.**

(30) Priorité: **10.09.82 CH 5384/82**

(43) Date de publication de la demande:
**21.03.84 Bulletin 84/12**

(45) Mention de la délivrance du brevet:
**10.06.87 Bulletin 87/24**

(84) Etats contractants désignés:
**DE FR GB**

(56) Documents cité:
**GB-A-2 005 876**
**GB-A-2 006 995**
**GB-A-2 067 795**
**GB-A-2 076 566**
**US-A-3 958 167**
**US-A-4 066 947**
**US-A-4 112 671**

**10e CONGRES INTERNATIONAL DE CHRONOMETRIE, no. 3, septembre 1979, GENEVE (CH) J. DEPERY: "Micromoteur pas-à-pas à deux sens de rotation", pages 15-20**
**BULLETIN ANNUEL DE LA SOCIETE SUISSE DE CHRONOMETRIE, vol. 10, 1981, NEUCHATEL (CH) S. OHTAWA et al.: "Stabilized drive system for stepping motor", pages 79-84**

(73) Titulaire: **SA Fabriques d'Ebauches, CH- 2540 Grenchen (CH)**

(72) Inventeur: **Klein, Eric, Sous- le- Village 9, CH- 2208 Les Hauts- Geneveys (CH)**

(74) Mandataire: **Barbeaux, Bernard, ICB Ingénieurs Conseils en Brevets SA Faubourg du Lac 6, CH- 2501 Bienne (CH)**

EP 0 103 542 B1

LIBER, STOCKHOLM 1987

## Description

La présente invention a pour objet un ensemble moteur fonctionnant pas-à-pas et utilisable, notamment mais non exclusivement, dans une montre électronique à affichage analogique.

Plus précisément, l'invention concerne un ensemble moteur fonctionnant pas-à-pas qui permet d'obtenir une vitesse de rotation accrue en marche avant et, également, en marche arrière.

Par ensemble moteur, il faut entendre non seulement le moteur proprement dit qui est constitué par le rotor et le stator, mais également le circuit de commande associé qui permet d'élaborer les impulsions motrices appliquées au moteur selon le type de fonctionnement désiré.

Dans le cas d'une montre qui comporte une aiguille de secondes entraînée par un moteur pas-à-pas et dans laquelle la correction se fait mécaniquement, il suffit de disposer d'un moteur qui fait un nombre de pas par seconde égal au nombre de pas que doit faire l'aiguille des secondes pour passer d'une division à la suivante. Ce nombre de pas est le plus souvent inférieur à six et égal à 1. Cela signifie donc que le moteur doit seulement faire six pas, au maximum, par seconde. L'obtention d'une telle vitesse de rotation du moteur ne pose aucun problème.

En revanche, si l'on considère le cas d'une montre sans aiguille de seconde mais dans laquelle on veut faire des corrections ou des changements de fuseaux horaires en commandant directement le moteur, on conçoit que le problème se présente différemment. Il est nécessaire de pouvoir commander le moteur en marche avant et en marche arrière avec une fréquence, c'est-à-dire avec un nombre de pas par seconde, sensiblement plus élevé. Or actuellement, avec des moteurs pas-à-pas du type Lavet, il est impossible de garantir un bon fonctionnement du moteur à une fréquence supérieure à 50 Hz en marche avant et à une fréquence supérieure à 30 Hz en marche arrière. Si l'on prend le cas d'une montre à aiguilles de minutes et d'heures dans laquelle il faut deux pas moteurs pour que l'aiguille progresse d'une division et si de plus, on veut effectuer un changement de fuseau horaire de cinq heures en marche arrière, on voit aisément qu'il faudra environ quatorze secondes pour effectuer cette seule correction. Cela est difficilement acceptable pour l'utilisation de la montre.

On voit donc qu'il serait effectivement intéressant de disposer d'un moteur pouvant être commandé avec une vitesse de rotation élevée.

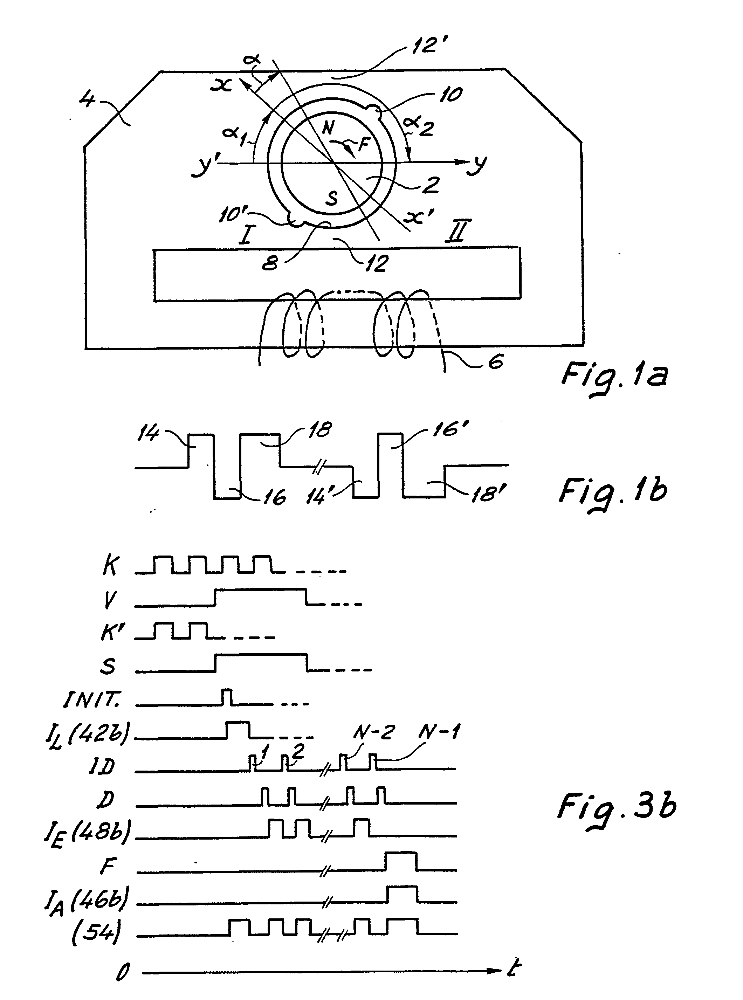

Pour mieux comprendre ce problème, on se référera aux figures 1a et 1b. La figure 1a représente un moteur du type Lavet classique. Le moteur comprend un rotor 2 constitué par un aimant permanent ayant, bien sûr, un pôle Nord et un pôle Sud et un stator 4 muni d'une bobine 6 qui reçoit les impulsions motrices de courant. Le stator 4 présente deux parties polaires référencées I et II qui sont réunies par des isthmes 12 et 12' et entre lesquelles est ménagé un orifice 8 dans lequel est logé le rotor 2. L'orifice 8 comporte, par exemple, deux encoches 10 et 10' pour définir un axe d'équilibre statique x'x pour le rotor. Cet axe x'x définit bien sûr, pour le rotor, deux positions de repos angulairement distantes de 180°, dans l'une ou l'autre desquelles le rotor vient spontanément se placer en l'absence de courant dans la bobine 6. On a également représenté sur la figure 1a l'axe y'y qui correspond aux deux positions d'équilibre dynamique du rotor, c'est-à-dire l'axe dans la direction duquel l'axe Sud-Nord de l'aimant tend à venir se placer lorsqu'un courant circule dans la bobine 6 et que, de ce fait, un champ magnétique est créé entre les deux régions polaires I et II du stator. Pour simplifier on suppose que l'axe y'y est confondu avec la direction principale du flux magnétique que la bobine 6 engendre à travers le rotor lorsqu'elle est parcourue par un courant. En réalité il existe un léger décalage angulaire entre les deux du fait du couple de positionnement qui est créé par les encoches 10 et 10' et auquel le rotor reste soumis en permanence.

L'angle $\alpha_1$ représenté sur la figure entre la direction x'x et la direction y'y vaut entre 30 et 60°. Bien entendu, on trouve également l'angle supplémentaire $\alpha_2$ qui, lui, est supérieur à 90°.

Par convention, on appellera sens positif de rotation ou marche avant du moteur, le sens de rotation correspondant à la flèche F de la figure 1a. L'autre sens de rotation correspond, bien sûr, à la marche arrière. En outre, on dira qu'une impulsion de courant appliquée à la bobine 6 est positive si elle crée un pôle Nord dans la zone polaire I et un pôle Sud dans la zone polaire II, et l'impulsion sera dite négative dans le cas contraire.

Si l'on part de la position du rotor représentée sur la figure 1a, c'est-à-dire celle pour laquelle l'axe Sud-Nord de l'aimant est orienté suivant l'axe x'x, et qu'on applique une impulsion de courant positive à la bobine 6, on comprend aisément que le rotor va tourner dans le sens positif de l'angle $\alpha_2$ jusqu'à ce que l'axe Sud-Nord du rotor soit en coïncidence avec la direction y'y d'équilibre dynamique. Lorsque l'impulsion cesse, le rotor occupe spontanément la position d'équilibre statique selon la direction x'x, mais inversée par rapport à la position initiale. Pour faire faire au rotor un nouveau demi-tour, c'est-à-dire le pas suivant, on applique, bien sûr, une impulsion négative qui crée un pôle Nord dans la région II et un pôle Sud dans la région I. Il apparaît donc que la rotation en marche avant ne présente pas de problèmes, du moins tant que la fréquence de rotation n'est pas élevée, de l'ordre de 50 Hz au maximum.

En effet, à ces fréquences, le temps séparant l'application de deux impulsions motrices est suffisant par rapport à la durée de l'impulsion motrice pour qu'une nouvelle impulsion ne soit appliquée qu'après que le rotor ait atteint sa position d'équilibre statique.

Au contraire, si l'on veut faire tourner le moteur en marche arrière à partir de cette même position initiale, il est clair qu'une simple impulsion négative ne sera pas suffisante, compte tenu de la faible valeur de l'angle $\alpha_1$ entre les deux positions d'équilibre statique et dynamique.

Le brevet américain 4.112.671, décrit un moyen de commande en marche arrière d'un tel moteur. On rappellera ici seulement brièvement ce moyen de commande.

Il consiste, comme cela est suggéré par la figure 1b, à envoyer une impulsion brève 14 de signe positif, et qui tend à faire tourner le rotor dans le sens positif d'un angle réduit, puis à appliquer une impulsion négative 16 correspondant effectivement à la rotation en marche arrière. L'impulsion 14 positive a pour effet d'augmenter artificiellement l'angle $\alpha_1$ et de permettre ainsi que le rotor arrive dans la position d'équilibre dynamique avec une énergie mécanique suffisante pour que l'impulsion positive suivante 18 l'amène effectivement dans la position d'équilibre statique déphasée de $\pi$ par rapport à celle qu'il occupait initialement. Pour effectuer le deuxième pas, il faudra bien sûr envoyer une succession d'impulsions 14', 16' et 18' identiques aux impulsions 14, 16 et 18, mais de polarité opposée.

On comprend aisément que ce fonctionnement du moteur en marche arrière, dit à balancement, ne permet pas une vitesse de rotation du moteur élevée, comme cela à été expliqué précédemment.

Pour rendre compte du fonctionnement d'un moteur de ce type, il est possible de définir un coefficient de couplage $\gamma$. Ce coefficient est défini par la relation suivante:

$$\gamma = -n \frac{d\phi}{d\alpha}$$

Dans cette expression n représente le nombre de spires de la bobine 6, $\phi$ le flux dû à l'aimant du rotor qui traverse la bobine et $\alpha$ l'angle de rotation du rotor. Bien entendu, $\gamma$ est une fonction sinusoïdale de l'angle $\alpha$ et on peut l'écrire
$$\gamma = \gamma_0 . \sin \alpha.$$
La valeur $\gamma_0$ peut être calculée à partir des caractéristiques géométriques du moteur, des caractéristiques magnétiques de l'aimant permanent du rotor et du nombre de spires de la bobine. On peut donc associer à chaque moteur une valeur de $\gamma_0$.

Cette valeur de $\gamma_0$ permet également de définir une fréquence de synchronisme du moteur qui représente la vitesse maximale de rotation que peut atteindre ce moteur. Cette fréquence synchrone $F_S$ est donnée par la formule suivante:

$$F_S = \left| \frac{Ui}{2\pi\gamma_0} \right|$$

formule dans laquelle Ui est la tension induite vraie.

L'invention a principalement pour but de fournir un ensemble moteur qui puisse tourner en marche avant et en marche arrière à une vitesse proche de la vitesse de synchronisme sans toutefois compliquer de façon trop importante la structure et le circuit de commande du moteur.

L'invention consiste à appliquer tout d'abord au moteur une impulsion de lancement en marche arrière ou en marche avant pour provoquer effectivement le démarrage du moteur dans le sens de rotation souhaité, puis à appliquer un train d'impulsions simples d'entretien de polarité alternée pour faire effectuer au moteur le nombre de pas désiré moins deux et enfin, à appliquer une impulsion simple d'arrêt ayant une polarité inverse de celle de la dernière impulsion d'entretien. Par "impulsion" il faut comprendre qu'il s'agit soit d'une impulsion unique, elle est dite alors "simple", soit d'une impulsion comportant en fait plusieurs impulsions unitaires et l'impulsion est alors dite "composite".

Il faut préciser encore qu'il est bien connu de commander les moteurs pas-à-pas avec des impulsions hachées. Il faut comprendre que les impulsions simples ou les impulsions unitaires des impulsions composites peuvent très bien être hachées sans que l'on sorte de l'invention. Le hachage a notamment pour but d'adapter l'énergie électrique appliquée au moteur lors de chaque impulsion motrice à l'énergie que doit effectivement recevoir le moteur pour effectuer un pas.

De préférence, les instants d'application d'au moins une partie des impulsions d'entretien et de l'impulsion d'arrêt, sont fixés à partir d'un grandeur représentative des variations du coefficient de couplage $\gamma$ du moteur en fonction de l'angle de rotation.

Selon le type de moteur pas-à-pas utilisé, l'impulsion de lancement en marche avant et en marche arrière peut différer d'un moteur à l'autre. En revanche, dans tous les cas, on applique effectivement des impulsions simples d'entretien et une impulsion simple d'arrêt.

D'autres caractéristiques et avantages de formes d'exécution de l'invention apparaîtront plus clairement à la lecture de la description qui suit de plusieurs modes de mise en oeuvre de l'invention donnés, à titre d'exemples non limitatifs. La description se réfère au dessin annexé sur lequel:

Les figures 1a et 1b, déjà décrites, montrent respectivement un moteur du type Lavet classique et une forme de signal de commande possible pour entraîner en marche arrière le rotor du moteur de la figure 1a.

Les figures 2a et 2b représentent des courbes montrant la forme des impulsions de commande selon l'invention pour faire retourner le moteur respectivement en marche avant et en marche arrière à une vitesse proche de la vitesse de synchronisme;

la figure 3a est un schéma général d'un premier mode de réalisation du circuit de commande du moteur selon l'invention, la figure 3b montrant les différents signaux utilisés dans le circuit de la figure 3a.

La figure 4 montre une variante de réalisation du circuit de commande;

la figure 5 est un schéma de détail de la figure 3 ou 4 montrant un mode de réalisation des circuits permettant d'élaborer chacune des impulsions motrices;

la figure 6 est une vue de détail montrant un mode d'asservissement de l'instant d'application des impulsions d'entretien et d'arrêt.

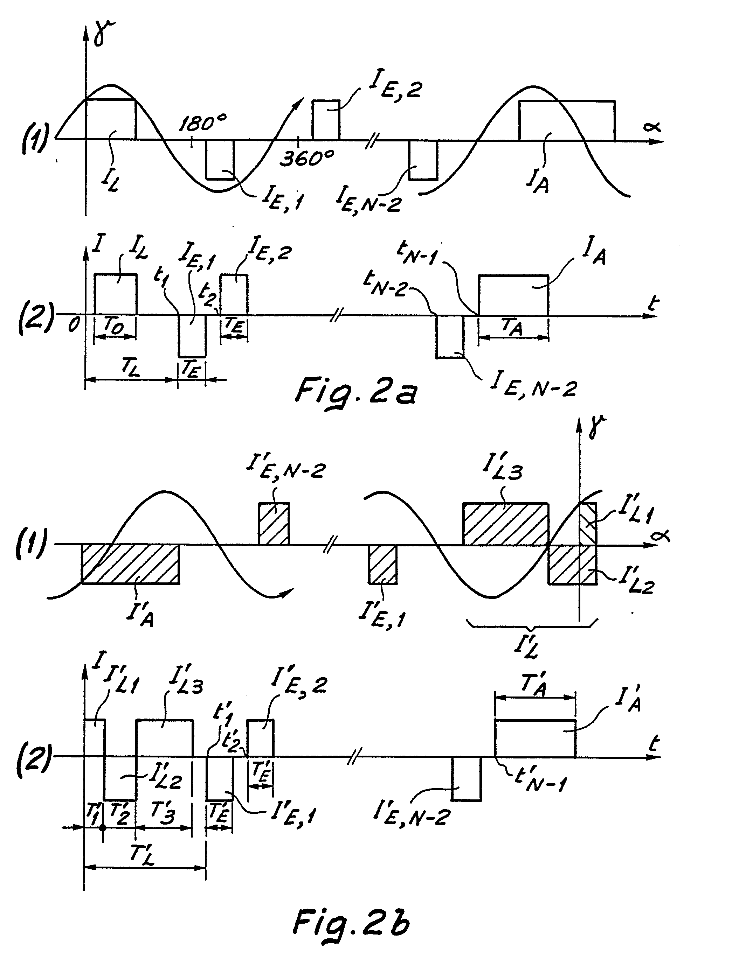

Les figures 2a et 2b montrent la façon dont on applique les impulsions motrices pour faire tourner le moteur en marche avant (fig. 2a) et en marche arrière (fig. 2b) sensiblement à la vitesse de synchronisme du moteur. L'exemple considéré concerne le moteur du type Lavet représenté sur la figure 1a. Cependant, comme cela sera expliqué ultérieurement, ce type de commande peut parfaitement s'appliquer à d'autres moteurs bipolaires ou multipolaires pas-à-pas.

Le diagramme 1 de la figure 2a montre la position des différentes impulsions motrices en fonction de la position du rotor ou, plus précisément, en fonction de l'angle $\alpha$ que fait un axe lié au rotor et passant, par exemple, par les pôles Sud et Nord, par rapport à une position de référence constituée par la direction $x'x$ d'équilibre statique du rotor. Tout d'abord, on a représenté sur le diagramme 1 la variation du coefficient de couplage $\gamma$ en fonction de l'angle $\alpha$. La définition du coefficient de couplage $\gamma$ a déjà été donnée. Sur ce diagramme 1, il apparaît clairement que la rotation du moteur de N pas en marche avant est obtenue en envoyant trois types d'impulsions: tout d'abord une impulsion de lancement $I_L$, puis une succession d'impulsions d'entretien $I_{E,1}$ à $I_{E,N-2}$ et enfin une impulsion d'arrêt $I_A$.

Comme le montre le diagramme 1, la position optimale des impulsions d'entretien $I_E$ est telle qu'elles soient centrées sur les positions angulaires correspondant aux extrema du coefficient de couplage en fonction de l'angle. L'impulsion $I_L$ a pour but de lancer le moteur dans le sens avant dans le cas du diagramme 1 et, l'impulsion d'arrêt $I_A$ a pour but d'arrêter effectivement le rotor lorsque les N pas désirés ont été effectués. On comprend aaisément que pour faire les N pas, il faut N -2 impulsions d'entretien puisque l'impulsion de lancement, respectivement l'impulsion d'arrêt, font effectuer également un pas au moteur.

Le diagramme 2 de la figure 2a montre la position des impulsions motrices dans le temps. On retrouve, bien entendu, l'impulsion de lancement $I_L$, les N -2 impulsions d'entretien $I_E$ et l'impulsion d'arrêt $I_A$.

Comme le montre le diagramme 2, l'impulsion de lancement a une durée $T_0$. Les impulsions d'entretien ont toutes la même durée $T_E$ et l'impulsion d'arrêt a une durée $T_A$. Enfin, les impulsions d'entretien et l'impulsion d'arrêt sont initialisées aux instants $t_1$ à $t_{N-1}$. La détermination des instants $t_1$ à $t_{N-1}$ peut se faire de deux manières différentes.

Si le nombre de pas N est limité, il est possible de déterminer à l'avance, en fonction des caractéristiques du moteur, les instants d'application de ces impulsions. Le moteur et le circuit de commande délivrent alors les impulsions d'entretien et l'impulsion d'arrêt aux instants prédéterminés en fonction du nombre de pas à réaliser. Si le nombre de pas à réaliser N est plus important, les instants d'application des impulsions d'entretien et de l'impulsion d'arrêt sont définis à partir de grandeurs électriques disponibles qui sont représentatives des variations de la valeur du coefficient de couplage afin que les impulsions d'entretien et d'arrêt soient effectivement envoyées sensiblement aux positions angulaires représentées sur le diagramme 1. Ces grandeurs physiques peuvent être le courant induit après l'impulsion motrice, la tension induite de vitesse qui est la tension induite due uniquement à la rotation du rotor ou la tension induite complète.

En comparant la valeur de ces grandeurs à un seuil, on détermine ainsi les instants $t_1$ à $t_{N-1}$. Toutefois, dans ce mode de commande avec auto-asservissement, on peut définir, à priori, l'instant $t_1$ d'application de la première impulsion d'entretien, cet instant $t_1$ apparaissant après la durée $T_L$ ayant pour origine le début de la commande de la rotation. En conséquence, dans ce cas, l'auto-asservissement ne commence à intervenir qu'après la première impulsion d'entretien $I_{E,1}$ pour définir les instants $t_2$ à $t_{N-1}$

Les diagrammes 1 et 2 de la figure 2b sont similaires au diagrammes 1 et 2 de la figure 2a, mais pour la commande en marche arrière sensiblement à la vitesse de synchronisme.

Le diagramme 1 montre qu'on retrouve encore une impulsion de lancement $I'_L$, N-2 impulsions d'entretien $I'_E$ et une impulsion d'arrêt $I'_A$. Le diagramme 1 montre que les impulsions d'entretien et l'impulsion d'arrêt correspondent exactement aux mêmes positions angulaires que les impulsions correspondantes pour le fonctionnement en marche avant. Le diagramme 1 correspond au cas d'un moteur à balancement qui a été décrit précédemment. En d'autres termes, l'impulsion de lancement $I'_L$ est composite et elle est constituée par les impulsions unitaires $I'_{L1}$, $I'_{L2}$ et $I'_{L3}$. Ces trois impulsions unitaires correspondent, bien sûr, aux impulsions 14, 16 et 18 de la figure 1b. L'impulsion $I'_{L1}$ fait tourner le rotor dans le sens positif d'un angle réduit; l'impulsion $I'_{L2}$ fait tourner le rotor dans le sens négatif jusqu'au voisinage de la position d'équilibre dynamique $y'y$ et l'impulsion $I'_{L3}$ amène le rotor dans la position d'équilibre statique $x'x$, mais décalée d'un angle égal à $\pi$ par rapport à la position initiale.

Le diagramme 2 de la figure 2b donne la disposition des différentes impulsions en fonction du temps. Il apparaît clairement que l'on retrouve les mêmes dispositions que pour la marche avant, à l'exception de l'impulsion de

lancement $I'_L$. La durée de chacune de impulsions unitaires de l'impulsion de lancement peut être définie au préalable pour chaque moteur. Par exemple les trois impulsions unitaires durent respectivement $T'_1$, $T'_2$ et $T'_3$. La première impulsion d'entretien $I'_{E,1}$ est appliquée à la bobine après le temps de lancement $T'_L$, c'est-à-dire à l'instant $t'_1$ et les impulsions d'entretien sont appliquées aux instants $t'_2$, $t'_3$ etc. Enfin, l'impulsion d'arrêt $I'_A$ qui dure un temps $T'_A$ est déclenchée l'instant $t_{N-1}$. Exactement comme pour la marche avant, les instants $t'_i$ d'application des impulsions d'entretien et d'arrêt peuvent être déterminés à l'avance pour un moteur donné dans le cas où le nombre d'impulsions à appliquer, c'est-à-dire dans le cas où le nombre de pas à effectuer, est réduit. Lorsque le nombre de pas est plus élevé, les instants $t_i$ sont déterminés par un asservissement comme pour la marche avant. Exactement comme dans le cas de la marche avant, l'instant $t'_1$ d'application de la première impulsion d'entretien peut être déterminé à l'avance, l'asservissement ne commencant à agir que pour la deuxième impulsion d'entretien.

On comprend ainsi que, lorsque l'on veut faire tourner le moteur à vitesse élevée, c'est-à-dire sensiblement à sa vitesse de synchronisme, il est possible de fixer le nombre de pas effectués par le moteur mais pas l'instant où chaque pas est effectué. Dans le cas de la marche avant, l'asservissement a simplement comme effet d'envoyer les impulsions d'entretien à la fréquence de synchronisme mais, comme on l'a déjà expliqué, le rotor tourne effectivement sous l'effet des impulsions d'entretien, en dehors de tout asservissement. Dans le cas du fonctionnement en marche arrière, l'asservissement définissant les instants $t'_i$ a non seulement pour but de faire tourner le rotor à la vitesse de synchronisme, mais cela permet en outre, dans le cas du moteur de la figure 1a, de commander chaque pas à l'aide d'une impulsion simple d'entretien alors que dans le mode de commande selon l'état de la technique, chaque pas doit être commandé en appliquant les impulsions composites de la figure 1b.

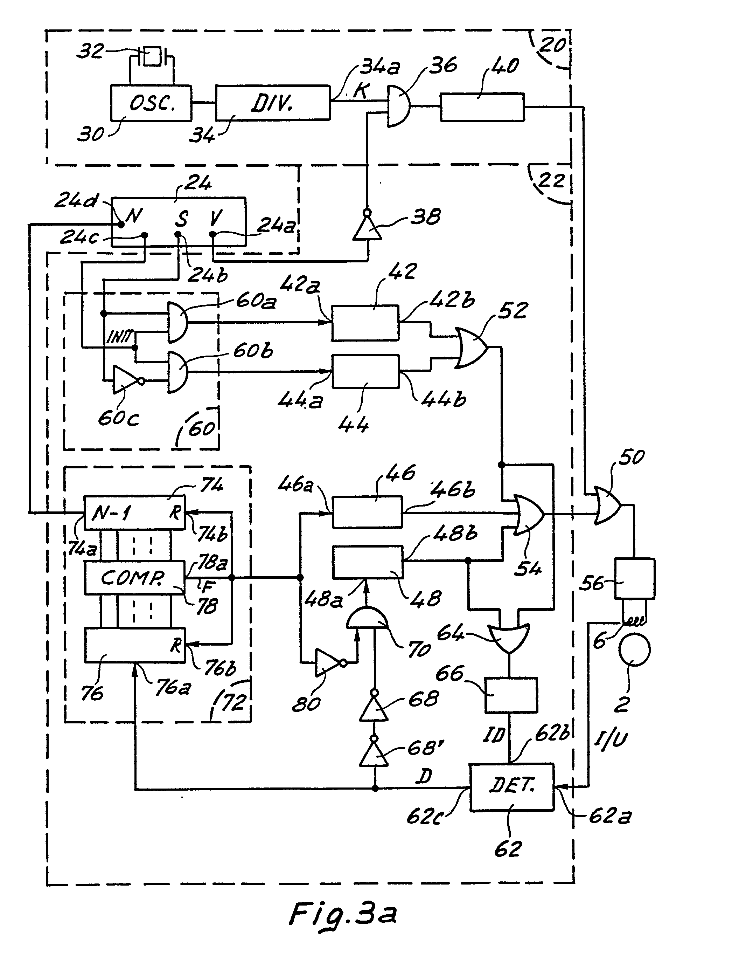

La figure 3 représente sous une forme simplifiée, un premier mode de réalisation du circuit de commande du moteur permettant de commander celui-ci en marche avant à vitesse normale et à vitesse de synchronisme et de le commander également en marche arrière à la vitesse de synchronisme. Le circuit de commande comprend un circuit 20 d'élaboration d'impulsions motrices normales et un circuit 22 d'élaboration d'impulsions motrices à vitesse rapide en marche avant ou en marche arrière, ces deux circuits d'élaboration étant commandés par des signaux élaborés par un circuit de contrôle 24. Dans le cas où le moteur est monté dans une montre, l'utilisateur dispose d'un certain nombre d'organes de commande qui lui permettent de mettre en oeuvre les différentes fonctions de la montre.

Le circuit 24 délivre sur sa première sortie 24a un signal V qui a le niveau logique 1 si le moteur doit être commandé à vitesse rapide et le niveau logique 0 dans le cas contraire. En conséquence, lorsque les organes de commande manuelle du fonctionnement de la montre sont au repos, le signal V est nul. Sur sa deuxième sortie 24b, le circuit 24 délivre un signal S définissant le sens de rotation du moteur. Ce signal S n'apparaît que si le moteur est commandé à vitesse rapide. Le signal S vaut, par exemple, 1 pour la marche avant et 0 pour la marche arrière. Sur sa sortie 24c, le circuit 24 délivre un signal d'initialisation de marche rapide INIT. Enfin, sur sa sortie 24d, le circuit 24 délivre un signal qui donne le nombre de pas N que doit effectuer le moteur.

L'invention ne concerne pas la façon dont sont précisément élaborés les signaux V, S, INIT et N. La structure du circuit 24 ne sera pas décrite.

Le circuit 20 d'élaboration des signaux à vitesse normale comprend de façon classique un oscillateur 30 avec son résonateur à quartz 32 qui délivre à des étages de division 34 un signal dont la fréquence est, par exemple, égale à 32867Hz. La sortie 34a de l'ensemble de division 34 délivre un signal K dont la fréquence est égale à la fréquence de commande du moteur. Par exemple, ce signal K a une fréquence de $1/30^{ième}$ Hz si, en fonctionnement normal, le moteur doit faire deux pas toutes les minutes. Cela correspond, par exemple, à une montre ne comportant pas d'aiguille de secondes et faisant deux pas pour passer d'une division des minutes à la division suivante. Le signal K est appliqué à l'une des entrées d'une porte ET 36 dont l'autre entrée recoit le signal V par l'intermédaire d'un inverseur 38. La porte 36 délivre donc le signal K de commande normale du moteur lorsque le signal de commande V est au niveau logique 0, c'est-à-dire lorsque précisément la vitesse rapide n'est pas enclenchée. La sortie de la porte 36 est reliée à un circuit formateur 40 qui a, comme cela est bien connu, pour fonction de donner à chaque impulsion motrice la largeur convenable.

Le circuit d'élaboration 22 comprend tout d'abord quatre générateurs d'impulsions 42, 44, 46 et 48 qui permettent respectivement d'élaborer l'impulsion de lancement en marche avant, l'impulsion de lancement en marche arrière, l'impulsion d'arrêt en marche avant ou en marche arrière et les impulsions d'entretien en marche avant et en marche arrière. Ces générateurs comportent des entrées d'activation 42a à 48a fixant les instants de début des impulsions correspondantes et des sorties 42b à 48b délivrant les impulsions correspondantes. Les sorties 42b à 48b sont reliées à l'une des entrées d'une porte OU, référencée 50, par l'intermédiaire de deux portes OU référencées respectivement 52 et 54. La porte logique 50 reçoit sur sa deuxième entrée le signal délivré par le circuit de mise en forme 40. La sortie de la porte logique 50 est reliée à l'entrée du circuit d'attaque 56 qui sert à appliquer effectivement les impulsions motrices à la bobine 6 du moteur.

On comprend qu'ainsi, lorsque le signal de commande V est au niveau logique 0, ce sont les impulsions motrices normales qui sont appliquées à la bobine et, au contraire, lorsque le signal V est au niveau logique 1, ce sont les impulsions de commande à vitesse rapide venant de la porte OU 54 qui sont appliquées à la bobine 6.

Le circuit d'élaboration 22 comprend d'autre part un ensemble de moyens pour définir les instants où les différents générateurs d'impulsions 42 à 48 doivent être activés pour produire les signaux correspondants. Les entrées d'activation 42a et 44a des générateurs 42 et 44 reçoivent le signal INIT par l'intermédiaire du commutateur 60. Les générateurs 42 et 44 sont déclenchés par le front de montée du signal INIT et le commutateur 60 est commandé par la valeur logique du signal S. Sur la figure 3a, le commutateur 60 est réalisé de façon connue par les portes ET, référencées 60a et 60b et par l'inverseur 60c. Bien entendu, ce commutateur pourrait être réalisé directement en circuits MOS.

Lorsque le signal S vaut zéro, le signal INIT est appliqué à l'entrée 44a du générateur d'impulsions de lancement en marche arrière et lorsque le signal S vaut 1, la même impulsion INIT est appliquée au générateur 42 délivrant l'impulsion de lancement en 10 marche avant.

Comme cela a déjà été indiqué, dans ce mode de réalisation, les instants t'$_1$ à t'$_N$ d'application des impulsions, respectivement d'entretien et d'arrêt, sont définis par un asservissement sur une grandeur liée au fonctionnement du moteur. Pour cela, le circuit de commande comporte un détecteur 62 qui reçoit sur son entrée 62a une grandeur liée au fonctionnement, et plus précisément à la position, du rotor du moteur. Cette grandeur peut être, de préférence, soit le courant induit après la fin de l'impulsion motrice précédente, soit la tension induite. Ce détecteur comporte également une entrée d'activation 62b qui commande la comparaison entre un seuil prédéterminé et la valeur de la grandeur représentative de la position du rotor. Lorsque cette comparaison à la condition prédéterminée est vérifiée, le détecteur émet une impulsion de détection D. La sortie de la porte OU référencée 52 et la sortie 48b du générateur d'impulsions d'entretien sont respectivement reliées aux entrées d'une porte OU, référencée 64, dont la sortie attaque un circuit de traitement 66. Ce circuit délivre sur sa sortie une impulsion dont le front de montée coïncide avec le front descendant des impulsions appliquées à son entrée. La sortie du circuit 66 est reliée à l'entrée d'activation 62b du détecteur 62. On comprend qu'ainsi, à chaque fois qu'il se présente un front descendant de l'impulsion de lancement ou d'une impulsion d'entretien, le détecteur est activé. Le signal D est d'une part appliqué à l'entrée d'activation 48a du générateur 48 par l'intermédiaire de deux inverseurs 68 et 68' et d'une porte référencée 70 et, d'autre part, également envoyé dans un circuit 72 qui sert à déterminer l'instant où doit être appliquée l'impulsion d'arrêt. Ce circuit 72 comprend tout d'abord une mémoire 74 qui reçoit sur son entrée d'activation 74a le signal N. La mémoire 74 mémorise le nombre N - 1, c'est-à-dire le nombre total d'impulsions d'entretien et d'impulsion d'arrêt. Le circuit 72 comprend également un compteur 76 dont l'entrée d'horloge 76a reçoit les impulsions de détection D. Le compteur 76 est donc incrémenté d'une unité à chaque fois qu'une impulsion d'entretien est appliquée à la bobine du moteur. Les états de la mémoire 74 et du compteur 76 sont comparés par le comparateur 78 qui délivre sur sa sortie 78a un signal de comparaison F lorsque le contenu du compteur 76 atteint la valeur mémorisée dans la mémoire 74. Lorsque le compteur atteint N -1, on comprend en effet que cela signifie qu'il faut appliquer l'impulsion qui doit faire effectuer au moteur son Nème pas. Il s'agit donc de l'impulsion d'arrêt. Pour cela, le signal F est appliqué à l'entrée d'activation 46a du générateur 46 qui délivre l'impulsion d'arrêt. Le signal F est également appliqué à la deuxième entrée de la porte ET référencée 70 par l'intermédiaire de l'inverseur 80. Ainsi, lorsque le signal F apparait, le générateur 46 délivre l'impulsion d'arrêt et en outre, la porte 70 est ensuite bloquée. En conséquence, le générateur d'impulsions d'entretien 48 n'est pas activé par l'impulsion D de détection. Il faut préciser que les inverseurs 68 et 68' ont pour but de créer un retard tel que l'impulsion D ne soit appliquée à l'entrée de la porte 70 qu'après l'élaboration éventuelle du signal F. En outre, le signal F est appliqué aux entrées de remise à zéro 74b et 76b, respectivement de la mémoire 74 et du compteur 76. Ainsi le circuit est prêt à recevoir de nouvelles instructions eventuelles de fonctionnement en marche rapide.

La figure 3b montre les diagrammes des temps des différents signaux utilisés dans le circuit.

Dans le mode de réalisation décrit précédemment, les impulsions de commande ont toutes une durée fixe. Les générateurs d'impulsions 42 à 48 pourraient donc être constitués par des monostables ayant une constante de temps égale à la durée souhaitée pour les impulsions. Bien sûr, dans le cas du générateur 44, il faudrait prévoir trois monostables déclenchés successivement pour élaborer les trois impulsions unitaires de l'impulsion de lancement en marche arrière. Cependant, comme dans une montre on dispose d'un diviseur de fréquence qui reçoit sur son entrée un signal à environ 32 kHz, il peut être plus intéressant pour élaborer les impulsions d'utiliser ces signaux périodiques.

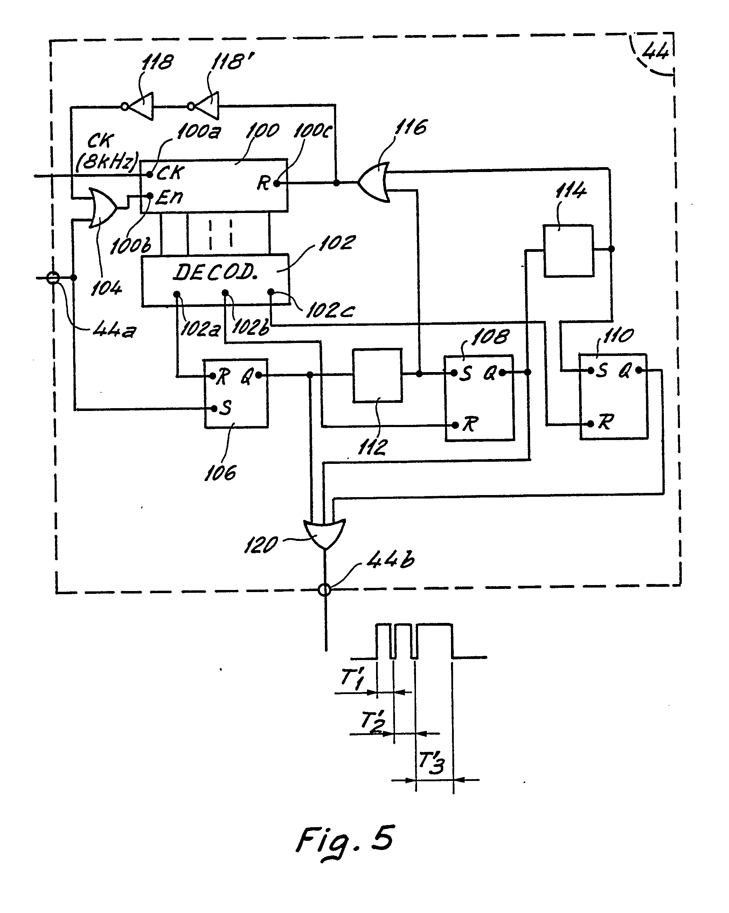

La figure 5 représente un mode possible de réalisation du générateur de signaux 44 qui délivre l'impulsion de lancement en marche arrière.

Le générateur d'impulsions 44 de la figure 5 comprend un compteur 100 qui reçoit sur son entrée d'horloge 100a un signal horaire venant du diviseur 34, ce signal ayant par exemple une fréquence de 8 kHz. Le compteur 100 est associé à un décodeur 102 qui reçoit sur ses entrées les sorties d'états binaires du compteur 100. Le décodeur 102 compare en permanence l'état du compteur 100 à des valeurs préaffichées. Dans le cas du générateur 44, le désodeur compare à trois valeurs. Lorsque l'égalité est atteinte le décodeur délivre un signal sur une de ses sorties 102a à 102c. On comprend qu'il faut que le compteur compte huit impulsions pour mesurer une durée de une milliseconde. Il est donc très simple de déterminer le nombre d'impulsions à compter pour mesurer les temps $T'_1$, $T'_2$ et $T'_3$ qui servent à élaborer l'impulsion de lancement en marche arrière. Ces différents temps correspondent à des nombres d'impulsions affichés dans le décodeur 102. Les sorties 102a à 102c délivrent un signal lorsqu'un nombre d'impulsions compté correspond respectivement au temps $T'_1$, $T'_2$ et $T'_3$. En outre, l'entrée d'activation 100b du compteur 100 est reliée à l'entrée 44a du générateur 44 par l'intermédiaire d'une porte OU 104. Chaque fois qu'un signal est appliqué sur l'entrée 100b, le compteur est incrémenté par les impulsions horaires appliquées sur son entrée d'horloge 100a. Le générateur comprend, en outre, essentiellement trois flip-flops du type RS, référencés respectivement 106, 108 et 110. Chaque flip-flop comporte une entrée S, une entrée R et une sortie Q. Les entrées R sont respectivement reliées aux sorties 102a à 102c du décodeur. Par ailleurs, l'entrée S du flip-flop 106 est reliée à l'entrée 44a du générateur. De plus le flip-flop 108 reçoit sur son entrée S la sortie Q du flip-flop 106, et le flip-flop 110 reçoit sur son entrée S la sortie Q du flip-flop 108 avec interposition chaque fois d'un circuit de traitement référencé respectivement 112 et 114. Les circuits 112 et 114 ont simplement pour but d'élaborer une impulsion de commande des flip-flops sur le front descendant des signaux délivrés par les sorties Q des flip-flops.

En outre, les sorties des circuits 112 et 114 sont reliées à l'entrée 100c de remise à zéro du compteur 100 par l'intermédiaire d'une porte OU référencée 116. La sortie de la porte OU 116 est reliée également à la deuxième entrée de la porte OU 104 par l'intermédiaire de deux inverseurs 118 et 118' qui ont pour but d'introduire un certain retard. Enfin, les sorties Q des flip-flops 106, 108 et 110 sont reliées aux trois entrées d'une porte OU 120 dont la sortie est reliée à la sortie 44b du générateur 44.

Le fonctionnement du générateur découle aisément de la description précédente. Initialement, l'entrée 44a est à zéro, ce qui bloque l'entrée 100a du compteur, et le compteur 100 ainsi que les flip-flops 106 à 110 ont leur sortie à zéro. Losqu'un signal est appliqué sur l'entrée 44a du générateur, la sortie du flip-flop 106 passe a 1 et le compteur 100 est incrémenté par les impulsions d'horloge CK. Lorsque la sortie 102a émet un signal, c'est-à-dire lorsque le temps $T'_1$ a

été compté, la sortie du flip-flop 106 passe à zéro. A cet instant, le circuit de mise en forme 112 délivre donc une impulsion qui, d'une part, fait passer la sortie Q du flip-flop 108 au niveau logique 1 et remet à zéro le compteur 100 et, d'autre part, réactive ce même compteur 100 avec un léger retard. Le même processus se déroule alors à nouveau jusqu'à ce que la sortie 102b du décodeur applique un signal sur l'entrée R du flip-flop 108. A cet instant, la deuxième impulsion de durée $T'_2$ apparaît sur la sortie 44b. Enfin, le même cycle est repris avec le flip-flop 110 pour élaborer l'impulsion de durée $T'_3$. Lorsque l'impulsion apparaissant sur la sortie 102c du décodeur se produit effectivement, le flip-flop 110 repasse à zéro et le compteur 100 est remis à zéro par des moyens non représentés.

On voit donc que sur la sortie 44b, on obtient effectivement les impulsions de lancement $I'_{L1}$, $I'_{L2}$ et $I'_{L3}$ mais ayant toutes la même polarité. L'alternance des polarités est obtenue à l'aide du circuit d'attaque 56. Bien entendu, une structure similaire, mais plus simple, peut être utilisée pour réaliser les générateurs 42, 46 et 48.

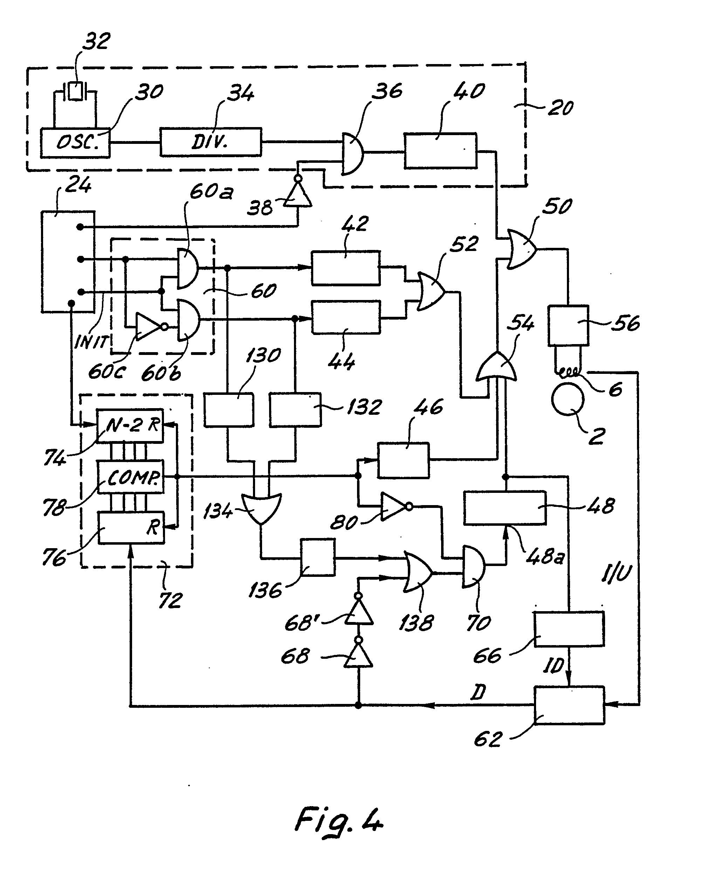

La figure 4 montre une variante de réalisation du circuit de la figure 3 dans le cas où l'instant d'application de la première impulsion d'entretien est prédéterminé et vaut $T_L$ ou $T'_L$ selon qu'il s'agit de la marche avant ou de la marche arrière. On a repris les mêmes références que sur la figure 3 pour désigner les parties communes. On retrouve inchangés le circuit d'élaboration des impulsions motrices normales 20, l'inverseur 60, les générateurs d'impulsions 42 à 48, le circuit de détection de fin d'impulsion 66 et le circuit de détection 62. Le circuit 72 de détection de l'instant d'application de l'impulsion d'arrêt est également identique à la seule exception que la mémoire 74 est chargée à la valeur N -2 lors de l'application du signal N par le circuit de contrôle 24. Les générateurs 42 et 44 sont alimentés par les sorties du commutateur 60. De même la sortie du comparateur 78 est reliée directement à l'entrée du générateur 46 et à l'entrée du générateur 48 par l'intermédiaire de l'inverseur 80 et d'une porte ET 70. La différence réside dans le fait que la sortie de la porte ET 60a est reliée en outre à l'entrée d'un autre générateur d'impulsions 130 définissant la durée $T_L$ pour le fonctionnement en marche avant et que la sortie de la porte 60b du commutateur 60 est reliée à l'entrée d'un autre générateur d'impulsions 132 définissant la durée $T'_L$ pour le fonctionnement en marche arrière. Les sorties des générateurs 130 et 132 sont reliées aux entrées d'une porte OU, référencée 134, dont la sortie est appliquée à l'entrée d'un circuit 136 identique au circuit 66. Le circuit 136 délivre une impulsion à la fin de l'impulsion délivrée par le générateur 130 ou 132. La sortie du circuit de détection de fin d'impulsion 136 est reliée à l'une des entrées d'une porte OU référencée 138. Cette porte OU reçoit sur une deuxième entrée le signal D retardé par les inverseurs 68 et 68'. La sortie de la porte OU, référencée 138, est reliée à la deuxième entrée de la porte ET référencée 70.

Selon le mode de réalisation de la figure 4, on voit que l'impulsion d'initialisation INIT active non seulement le générateur 42 ou 44 selon le sens de rotation souhaité, mais également le générateur 130 ou 132 selon le sens de rotation souhaité. Les impulsions de lancement sont délivrées par les générateurs 42 et 44 comme dans le cas de la figure 3a. Cependant, l'impulsion de lancement n'active pas le détecteur 62. En effet, le circuit de détection de fin d'impulsion 66 n'est pas relié à la sortie des générateurs 42 et 44. Lorsque l'impulsion délivrée par le générateur 130 ou 132 est terminée, et si le comparateur 78 n'a pas délivré le signal F d'identité, une impulsion est effectivement appliquée à l'entrée d'activation du générateur 48 qui délivre ainsi la première impulsion d'entretien. On voit aisément que, après que la sortie du générateur 130 ou du générateur 132 soit retombée à zéro, la porte 138 reçoit en permanence sur une de ses entrées un signal de niveau logique 0. L'ensemble du circuit se comporte donc alors exactement comme celui de la figure 3a pour réaliser l'application des deuxième, troisième, etc. impulsions d'entretien et l'application de l'impulsion d'arrêt.

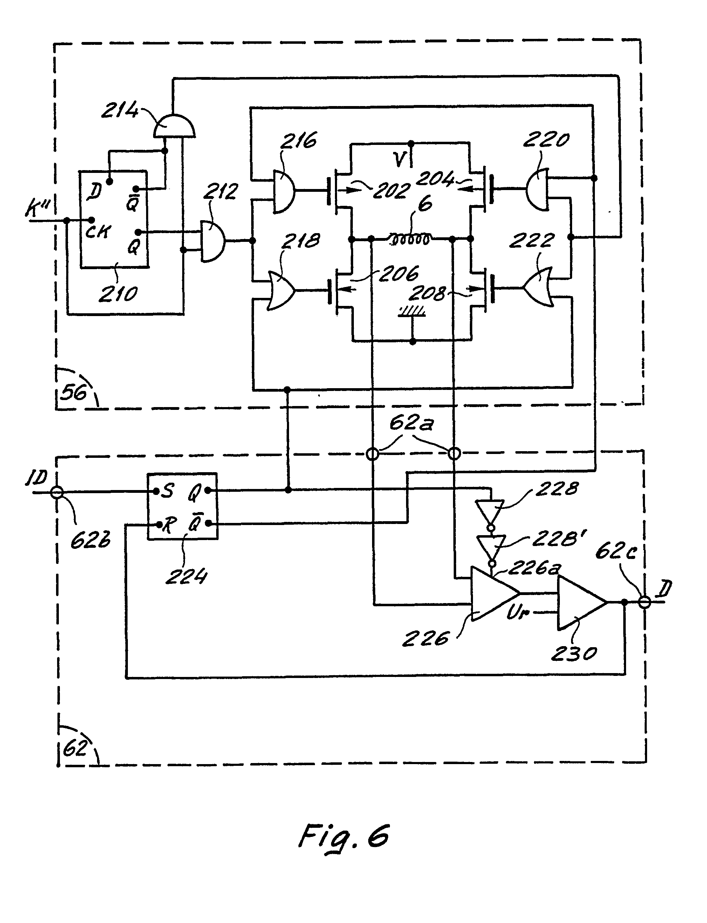

La figure 6 montre plus en détail un mode de réalisation possible du circuit d'attaque 56, et du circuit de détection 62 dans le cas où les instants d'application des impulsions d'entretien et d'arrêt sont définis à partir de la mesure de la tension induite après l'impulsion motrice précédente.

Le circuit 56 comprend de façon classique un pont constitué par deux transistors MOS à canal P référencés 202 et 204 et par deux transistors MOS à canal N référencés 206 et 208 qui sont commandés pour appliquer dans un sens et dans l'autre la tension V à la bobine 6 du moteur. En fait, le circuit 56 permet non seulement d'appliquer les impulsions motrices alternées mais encore, de mettre la bobine 6 en circuit ouvert après chaque impulsion motrice d'une part, pour améliorer le fonctionnement du moteur et, d'autre part et surtout, pour mesurer la tension induite.

Le signal de commande K" délivré par la porte 50 est appliqué à l'entrée d'horloge CK d'une bascule de type D référencée 210. La sortie Q de la bascule 210 est reliée à une entrée d'une porte ET référencée 212, tandis que la sortie Q' est reliée d'une part à l'entrée D de la bascule et, d'autre part, à une entrée d'une porte ET référencée 214. Les deuxièmes entrées des portes 212 et 214 reçoivent le signal K". Ainsi, les impulsions du signal K" apparaissent alternativement à la sortie des portes 212 et 214. La sortie de la porte 212 attaque une entrée, respectivement d'une porte ET référencée 216 et d'une porte OU référencée 218. Les sorties de ces portes attaquent respectivement les grilles des transistors 202 et 206. Symétriquement, la sortie de la porte 214 attaque une entrée respectivement d'une porte ET, référencée 220, et d'une porte OU, référencée 222. Les sorties de ces portes attaquent respectivement les grilles des transistors 204 et 208. En faisant abstraction des portes 216 à 222, il apparaît clairement que le circuit 56 est un circuit d'attaque d'une bobine de moteur parfaitement classique.

Le circuit de détection 62 comprend une bascule RS référencée 224 dont l'entrée S est reliée à l'entrée 62b du circuit 62. L'entrée S de la bascule 224 reçoit donc le signal ID. La sortie Q de la bascule 224 sert, d'une part, à ouvrir le circuit de la bobine 6 et, d'autre part, à déterminer le début de la mesure de la tension induite servant à déterminer les instants $t_i$ et $t'_i$. Pour remplir la première fonction, la sortie Q de la bascule 224 est reliée aux deuxièmes entrées des portes 218 et 222. La sortie Q' est reliée aux deuxièmes entrées des portes 216 et 220.

Les bornes de la bobine 6 sont reliées aux entrées 62a du circuit 62. Les entrées 62a sont reliées aux entrées d'un soustracteur 226 qui délivre un signal égal à la différence des tensions appliquées sur ses deux entrées lorsqu'un signal d'activation est appliqué sur son entrée de commande 226a. L'entrée de commande 226a reçoit le signal délivré par la sortie Q de la bascule 224 avec un retard de l'ordre de 0,2 ms, ce retard étant, par exemple, introduit par deux inverseurs 228 et 228'. Le circuit 62 comprend enfin un comparateur 230 qui reçoit sur une première entrée le signal délivré par le soustracteur 226 c'est-à-dire, la tension induite Ui, et sur son autre entrée, une tension de référence Ur. Le comparateur 230 délivre sur la sortie 62c le signal D de détection lorsque la tension induite Ui devient supérieure à la tension de référence Ur.

La fonctionnement des circuits 56 et 62 découle de la description précédente. Lors de la commande du moteur à vitesse normale, il n'y a pas de signal ID. La sortie Q de la bascule 224 est à zéro et la sortie Q au niveau 1. Donc, d'une part, le circuit 226 n'est pas excité et, d'autre part, les portes OU, référencées 218 et 222, reçoivent sur leur deuxième entrée le signal 0 et les portes ET référencées 216 et 220 reçoivent sur leur deuxième entrée le signal 1. Les quatre portes 216 à 222 délivrent donc respectivement le signal appliqué sur leur première entrée. On retrouve donc la commande normale d'application des impulsions motrices alternées à la bobine 6.

Lors de la commande du moteur à vitesse accélérée, il apparaît un premier signal ID à la fin de l'impulsion de lancement $I_L$ ou $I'_L$ (cas de la fig. 3a) ou à la fin de la première impulsion d'entretien $I_{E,1}$ ou $I'_{E,1}$ (cas de la fig. 4.). Cette impulsion fait passer la sortie Q de la bascule 124 à 1, et les sorties des portes ET 216 et 220 à 0. En conséquence, les quatre transistors 202 à 208 sont bloqués. La bobine 6 est donc en circuit ouvert. Le soustracteur 226 reçoit sur ses entrées la valeur de la tension induite Ui. Après 0,2 ms, le soustracteur 226 est activé et délivre donc effectivement sur sa sortie une tension égale à la tension induite. Dès que cette tension devient supérieure à Ur, un signal D apparaît à la sortie du comparateur 230. Comme cela a déjà été expliqué, ce signal D est appliqué à l'entrée du générateur d'impulsions 48. Simultanément, le signal D est appliqué à l'entrée R de la bascule 224. La sortie Q de la bascule repasse donc à nouveau à 0 et la sortie Q̄ à 1. Les portes 216 à 222 sont donc à nouveau prêtes à recevoir la commande de l'impulsion d'entretien suivante ou de l'impulsion d'arrêt.

Des essais ont été faits sur un moteur du type Lavet bipolaire ayant les caractéristiques suivantes:

diamètre du stator : 2.40 mm; diamètre du rotor: 1,60 mm; nombre de spires de la bobine : 8200; résistance de la bobine :20 kΩ;

les paramètres suivants on été adoptés :

$U_r = 50$ m V

en marche avant:

$T_o = 4$ ms; $T_L = 7$ ms; $T_E = 3,5$ ms; $T_A = 7$ ms.

en marche arrière:

$T'_1 = 2$ ms; $T'_2 = T'_3 - 5$ ms;

$T'_L = 13$ ms; $T'_E = 3,5$ ms $T_{,A} = 7$ ms.

Avec une telle disposition, il est effectivement possible de faire fonctionner le moteur en marche avant et en marche arrière à une fréquence très proche de la fréquence théorique de synchronisme qui est de l'ordre de 200 Hz. D'autre part, on obtient effectivement l'arrêt du moteur après l'application de l'impulsion d'arrêt $I_A$ ou $I'_A$.

De plus, la plage de tension d'alimentation est sensiblement accrue par rapport à celle qu'on obtient avec une commande normale, surtout pour le fonctionnement en marche arrière.

Il est clair, comme cela a déjà été expliqué, que d'autres grandeurs électriques représentatives des variations du coefficient de couplage, c'est-à-dire de la position du rotor, pourraient être utilisées. Il suffirait de modifier le détecteur 62.

En outre, d'autres types de moteur pourraient être utilisés dans l'ensemble moteur selon l'invention. On peut citer en particulier, un moteur dérivé du type Lavet dans lequel la position d'équilibre statique fait un angle de 90° avec la position d'équilibre dynamique du rotor. Pour cela, le stator comprend deux zones saturables diamétralement opposées définies par des encoches et deux zones présentant une variation élevée de réluctance également diamétralement opposées. De plus, les quatre zones sont réparties symétriquement par rapport à la position d'équilibre statique. Avec un tel moteur, l'impulsion de lancement en marche arrière $I'_L$ consiste en une seule impulsion qui a la même durée que l'impulsion de lancement en marche avant $I_L$.

Il découle de la description précédente que l'ensemble moteur selon l'invention s'adapte particulièrement bien à une montre analogique. Cependant, un tel ensemble moteur pas-à-pas pourrait trouver des applications intéressantes dans d'autres domaines de la technique.

## Revendications

1. Ensemble moteur comprenant un moteur pas à pas comportant un rotor et un stator muni d'une bobine et un circuit d'élaboration d'impulsions de commande pour appliquer à ladite bobine des impulsions motrices afin de provoquer la rotation du rotor de N pas dans un premier sens ou dans un deuxième sens à vitesse élevée, caractérisé en ce que ledit circuit de commande comprend des moyens pour élaborer au moins trois types d'impulsions de commande motrice qui sont appliqués successivement à la bobine, à savoir:

- une impulsion motrice de lancement pour provoquer la rotation du moteur dans un desdits sens;

- N -2 impulsions motrices simples d'entretien de polarité alternée pour provoquer la rotation du rotor de N -2 pas dans ledit sens; et

- une impulsion motrice simple d'arrêt dont la polarité est inverse de celle de la dernière impulsion d'entretien.

2. Ensemble moteur selon la revendication 1, caractérisé en ce que ledit circuit de commande comprend en outre:

- des moyens pour élaborer un signal électrique représentatif des variations du coefficient de couplage dudit moteur en fonction de la position du rotor; et

- des moyens pour définir l'instant d'application à la bobine d'au moins certaines impulsions d'entretien et de ladite impulsion d'arrêt en reponse audit signal représentatif.

3. Ensemble moteur selon la revendication 2, caractérisé en ce que ledit signal représentatif est la tension induite dans la bobine.

4. Ensemble moteur selon la revendication 2, caractérisé en ce que ledit signal représentatif est le courant induit dans la bobine.

5. Ensemble moteur selon la revendication 1, caractérisé en ce que lesdites impulsions d'entretien ont toutes une même première durée fixe, et en ce que ladite impulsion d'arrêt a une deuxième durée fixe supérieure à ladite premipre durée.

## Patentansprüche

1. Motoranordnung, beinhaltend einen Schrittmotor, umfassend einen Rotor und einen Stator, der mit einer Spule und einem Schaltkreis zur Erzeugung von Steuerimpulsen zum Anlegen von Antriebsimpulsen an die Spule versehen ist, um die Drehung des Rotors um N Schritte in einem ersten Sinn oder in einem zweiten Sinn mit erhöhter Geschwindigkeit zu bewirken, dadurch gekennzeichnet, daß der besagte Steuerkreis Mittel zum Erzeugen won wenigstens drei Typen von Antriebssteuerimpulsen umfaßt, die aufeinander folgend an die Spule gelegt werden, und zwar

- ein Startantriebsimpuls zum Hervorrufen der Rotation des Motors in einem der besagten Sinne;

- N-2 einfache Bedienungsantriebsimpulse alternierender Polarität zum Bewirken der Rotation des Rotors um N-2 Schritte in dem besagten Sinn; und

- einen einfachen Antriebsimpuls zum Stoppen, dessen Polarität umgekehrt zu derjenigen des letzten Bedienungsimpulses ist.

2. Motoranordnung gemäß Anspruch 1, dadurch gekennzeichnet, daß der besagte Steuerkreis des weiteren

- Mittel zum Erzeugen eines elektrischen Signals, das repräsentativ für Änderungen des Kopplungskoeffizienten des Besagten Motors als Funktion der Position des Rotors ist; und

- Mittel zum Definieren des Anlegungsmomentes von wenigstens bestimmten Bedienungsimpulsen und des besagten Stoppimpulses in Ansprache auf das besagte repräsentative Signal an die Spule umfaßt.

3. Motoranordnung gemäß Anspruch 2, dadurch gekennzeichnet, daß das besagte repräsentative Signal die in der Spule induzierte Spannung ist.

4. Motoranordnung gemäß Anspruch 2, dadurch gekennzeichnet, daß das besagte repräsentative Signal der in der Spule induzierte Strom ist.

5. Motoranordnung gemäß Anspruch 1, dadurch gekennzeichnet, daß die besagten Bedienungsimpulse sämtlich eine gleiche erste feststehende Dauer haben, und daß der besagte Stoppimpuls eine zweite feststehende Dauer größer als die besagte erste Dauer besitzt.

**Claims**

1. A motor unit comprising a stepping motor having a rotor and a stator fitted with a coil, and a control pulse generating circuit for applying drive pulses to said coil to cause the rotor to rotate N steps in a first direction or in a second direction at high speed, characterised in that said control circuit comprises means for generating at least three types of drive pulses which are successively applied to the coil, i.e.

- a starting drive pulse to initiate rotation of the motor in one of said directions;

- N-2 simple maintaining drive pulses of alternating polarity to cause the rotor to rotate N-2 steps in said one direction; and

- a simple stopping drive pulse having a polarity opposite to that of the last maintaining pulse.

2. A motor unit as in claim 1, characterised in that said confrol circuit further comprises:

- means for generating an electric sigal representative of the variations in the coupling coefficient of said motor in dependence on the position of the rotor; and

- means for defining the instant at which as least some of the maintaining pulses and said stopping pulses are applied to said coil in response to said representative signal.

3. A motor unit as in claim 2, characterised in that said representative signal is the voltage induced in the coil.

4. A motor unit as in claim 2, characterised in that said representative signal is the current induced in the coil.

5. A motor unit as in claim 1, characterised in that said maintaining pulses all have a first, fixed, duration, and in that said stopping pulse has a second, fixed, duration greater than said first duration.

Fig.1a

Fig.1b

Fig.3b

Fig. 2a

Fig. 2b

Fig.3a

**Fig. 4**

Fig. 5

Fig. 6